# DEMANDE DE BREVET EUROPEEN

(11) **EP 4 147 894 A1**
(43) Date de publication de la demande: **15.03.2023**
(21) Numéro de dépôt: 22194260.0
(22) Date de dépôt: 07.09.2022
(51) Int. Cl.: B60J 5/06, B62D 65/06

(54) **AGENCEMENT DE POSITIONNEMENT ET DE MAINTIEN POUR UNE PORTE COULISSANTE DE VÉHICULE**

(30) Priorité: 14.09.2021 FR 2109602
(71) Demandeur: Renault s.a.s, 92100 Boulogne Billancourt (FR)
(72) Inventeur: BENDOUDJEMA, Mohand, 78280 guyancourt (FR); MOINE-PICARD, Thierry, 78280 guyancourt (FR)

(57) **Abrégé**

L'invention porte sur un agencement (3) destiné à assurer le positionnement et le maintien d'un rail de guidage (20) d'une porte latérale coulissante de véhicule, notamment le positionnement et le maintien d'un rail de guidage inférieur, comprenant un rail de guidage (20) comprenant une extrémité arrière (22) et une extrémité avant (21), un côté de caisse (10) comprenant un boîtier (30) de positionnement et de maintien de l'extrémité avant (21) du rail de guidage (20), le boîtier (30) s'étendant transversalement vers l'intérieur d'un tel véhicule, le côté de caisse (10) et le rail de guidage (20) comprenant des moyens de positionnement (50) l'un par rapport à l'autre et le côté de caisse (10) et le rail de guidage (20) comprenant des moyens de maintien (60) l'un par rapport à l'autre, les moyens de positionnement (50) étant distincts des moyens de maintien (60).

## Description

### Domaine technique de l'invention

L'invention concerne un agencement de positionnement et de maintien d'une porte coulissante pour véhicule. L'invention porte encore sur un véhicule comprenant un tel agencement. L'invention porte enfin sur un procédé de montage d'un tel agencement.

### Etat de la technique antérieure

Un véhicule nécessite parfois d'avoir un accès conséquent au sein de l'habitacle. En cas de véhicule automobile, notamment de type véhicule utilitaire, il est généralement équipé d'au moins une porte latérale coulissante.

Une telle porte latérale coulissante est généralement maintenue et guidée par rapport à un côté de caisse adjacent. Ce maintien et ce guidage sont généralement assurés par l'intermédiaire d'au moins un rail fixé sur le côté de caisse coopérant avec des moyens de déplacement fixés à la porte coulissante. Généralement, un opérateur fixe un gabarit sur le côté de caisse de sorte à assurer la bonne mise en place du guide et de la porte. Un tel gabarit nécessite d'être monté puis démonté ce qui est long et pénible. Seulement, même avec un gabarit, l'installation de la porte sur le côté de caisse subit les dispersions d'assemblage et/ou de montage du ou des rails sur le côté de caisse. Il en résulte des décalages et/ou jeux et/ou affleurements excessifs entre la porte et le côté de caisse, en particulier en position fermée de la porte. En outre, en cas de jeux irréguliers, des points durs et/ou grincements gênent les déplacements en ouverture et/ou en fermeture de la porte.

Pour remédier à ces inconvénients, des réglages chronophages, complexes, fastidieux et par conséquent onéreux s'avèrent nécessaires.

De plus, une telle porte étant généralement lourde, de tels réglages occasionnent des efforts pénibles pour l'opérateur.

### Présentation de l'invention

Le but de l'invention est de fournir un agencement remédiant aux inconvénients ci-dessus. En particulier, l'invention propose une solution permettant de faciliter le montage d'un rail de guidage et d'une porte coulissante.

### Résumé de l'invention

Pour atteindre cet objectif l'invention porte sur un agencement destiné à assurer le positionnement et le maintien d'un rail de guidage d'une porte latérale coulissante de véhicule, notamment de véhicule automobile, notamment le positionnement et le maintien d'un rail de guidage inférieur, comprenant :
- un rail de guidage comprenant une extrémité arrière et une extrémité avant,
- un côté de caisse comprenant un boîtier de positionnement et de maintien de l'extrémité avant du rail de guidage, le boîtier s'étendant transversalement vers l'intérieur d'un tel véhicule,
le côté de caisse et le rail de guidage comprenant des moyens de positionnement l'un par rapport à l'autre et en ce que le côté de caisse et le rail de guidage comprenant des moyens de maintien l'un par rapport à l'autre, les moyens de positionnement étant distincts des moyens de maintien.

Les moyens de positionnement peuvent comprendre un pion de centrage arrière fixés sur le côté de caisse, notamment par soudage, le pion de centrage arrière pouvant s'étendre transversalement vers l'extérieur d'un tel véhicule,
les moyens de positionnement pouvant comprendre un orifice arrière ménagé sur le rail de guidage,
l'orifice arrière pouvant être destiné à s'insérer sur le pion de centrage arrière.

Le boîtier peut comprendre une face distale s'étendant dans un plan vertical et longitudinal, ou sensiblement vertical et longitudinal, la face distale pouvant être orientée du côté intérieur d'un tel véhicule,
et l'agencement peut comprendre une plaque, la plaque pouvant être destinée à venir en vis-à-vis de la face distale, notamment au contact de la face distale du boîtier.

Les moyens de positionnement peuvent comprendre un pion de centrage avant fixé sur la face distale du boîtier, notamment par soudage, le pion de centrage avant pouvant s'étendre transversalement vers l'intérieur d'un tel véhicule,
les moyens de positionnement pouvant comprendre un orifice avant ménagé sur la plaque,
l'orifice avant pouvant être destiné à s'insérer sur le pion de centrage avant.

Les moyens de positionnement peuvent comprendre deux pions de centrage avant fixés sur la face distale du boîtier, notamment par soudage, les deux pions de centrage avant pouvant s'étendre transversalement vers l'intérieur d'un tel véhicule,
les moyens de positionnement pouvant comprendre deux orifices avant ménagés sur la plaque, les deux orifices avant pouvant être destinés à s'insérer sur les deux pions de centrage avant, et/ou les moyens de positionnement pouvant comprendre deux pions de centrage arrière fixés sur le côté de caisse, notamment par soudage, les deux pions de centrage arrière pouvant s'étendre transversalement vers l'extérieur d'un tel véhicule,
les moyens de positionnement pouvant comprendre deux orifices arrière ménagés sur le rail de guidage, les deux orifices arrière pouvant être destinés à s'insérer sur les deux pions de centrage arrière.

Les moyens de maintien peuvent comprendre une tige filetée s'étendant depuis le rail de guidage au niveau de son extrémité avant, la tige filetée pouvant s'étendre transversalement vers l'intérieur d'un tel véhicule, le boîtier pouvant comprendre un trou de passage de la tige filetée, la plaque pouvant comprendre un trou oblong de passage de la tige filetée, les moyens de maintien pouvant comprendre un écrou destiné à coopérer avec la tige filetée de sorte à maintenir en position le rail de guidage par rapport au boîtier.

Les moyens de maintien peuvent comprendre au moins un trou ménagé dans le rail de guidage et/ou ménagé dans le côté de caisse et au moins un moyen de fixation du rail de guidage sur le côté de caisse, l'au moins un moyen de fixation pouvant coopérer avec l'au moins un trou de sorte à fixer le rail de guidage sur le côté de caisse, notamment un moyen de fixation de type vis/écrou.

Le boîtier peut être obtenu à partir de deux demi-coques, notamment deux demi-coques en tôle emboutie, notamment une demi-coque supérieure et une demi-coque inférieure, les demi-coques pouvant être fixées l'une à l'autre, notamment par soudage.

La face distale peut s'étendre sur une seule demi-coque ou sensiblement sur une seule demi-coque.

L'agencement peut comprendre une entretoise, notamment une rondelle, agencée entre la face distale du boîtier et la plaque.

L'invention porte encore sur un véhicule, notamment un véhicule automobile, comprenant au moins un agencement tel que défini précédemment.

L'invention porte encore sur un procédé de montage d'un agencement tel que défini précédemment, le procédé comprenant :
- une étape de fourniture d'un rail de guidage, d'un côté de caisse comprenant un boîtier de positionnement et de maintien d'une extrémité avant du rail de guidage, le boîtier s'étendant transversalement vers l'intérieur d'un tel véhicule,
- une étape de positionnement du rail de guidage par rapport au côté de caisse par l'intermédiaire de moyens de positionnement, éventuellement précédée ou suivie d'une étape de positionnement d'une plaque en vis-à-vis d'une face distale du boîtier, notamment après une étape de montage d'une entretoise au contact de la face distale, puis
- une étape de fixation du rail de guidage sur le côté de caisse par l'intermédiaire de moyens de maintien, notamment par serrage de moyens de maintien de type vis/écrous.

### Présentation des figures

Ces objets, caractéristiques et avantages de la présente invention seront exposés en détail dans la description suivante d'un mode de réalisation et d'un mode d'exécution d'un procédé de montage, faite à titre non-limitatif en relation avec les figures jointes parmi lesquelles :
[Fig. 1] La figure 1 est une vue schématique d'un véhicule automobile selon un mode de réalisation.
[Fig. 2] La figure 2 est une vue partielle en perspective d'un agencement selon un mode de réalisation.
[Fig. 3] La figure 3 est une vue de détail de l'agencement selon le mode de réalisation.
[Fig. 4] La figure 4 est une autre vue de détail de l'agencement selon le mode de réalisation, une plaque étant apposée.
[Fig. 5] La figure 5 est une autre vue de détail de l'agencement selon le mode de réalisation, la plaque et un rail de guidage étant approchés.
[Fig. 6] La figure 6 est une autre vue de détail de l'agencement selon le mode de réalisation, la plaque et le rail de guidage étant montés.
[Fig. 7] La figure 7 est une vue de détail en coupe selon un plan transversal et longitudinal de l'avant de l'agencement selon le mode de réalisation.
[Fig. 8] La figure 8 est une vue schématique en coupe selon un plan passant par l'axe d'un goujon de l'agencement selon le mode de réalisation.
[Fig. 9] La figure 9 est une vue en perspective d'un rail de guidage de l'agencement selon le mode de réalisation.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

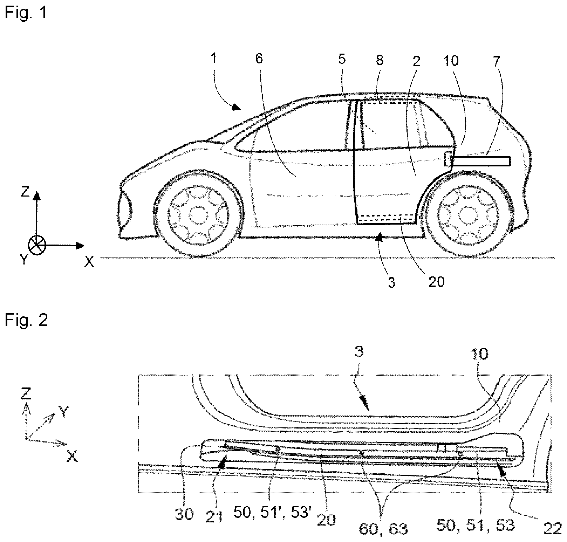

La figure 1 illustre schématiquement un véhicule 1, de préférence un véhicule automobile. Le véhicule comprend au moins un côté de caisse. De préférence, le véhicule comprend un côté de caisse 10 côté gauche et un côté de caisse côté droit (non illustré). Le véhicule comprend au moins une porte d'accès 2 au sein d'un habitacle 5 et/ou zone de chargement. La porte 2 est coulissante. Avantageusement, la porte 2 est une porte latérale coulissante. De préférence, la porte latérale coulissante 2 est une porte arrière. Par porte arrière, on entend une porte agencée derrière une porte avant 6. Par exemple, le véhicule comprend une porte latérale coulissante du côté gauche (illustrée sur la figure 1) et une porte latérale coulissante du côté droit. Eventuellement, le véhicule comprend plusieurs portes latérales coulissantes côté droit et/ou côté gauche.

Par la suite, pour simplifier, la porte latérale coulissante 2 agencée côté gauche du véhicule est nommée porte 2 ou porte.

Comme illustré sur la figure 1, la porte 2 est maintenue et guidée par rapport au côté de caisse 10 par l'intermédiaire d'un rail de guidage inférieur 20. De préférence, en complément, la porte est guidée et/ou maintenue par rapport au côté caisse par l'intermédiaire de moyens centraux 7 et/ou de moyens supérieurs 8. Ainsi le véhicule 1 comprend le rail de guidage 20 et des moyens aptes à coopérer avec le rail 20, par exemple de type bras et/ou chariot. De préférence, le véhicule 1 comprend encore les moyens centraux 7 et/ou les moyens supérieurs 8, par exemple de type rails et/ou bras et/ou chariots.

Le véhicule comprend de plus un agencement 3 représenté notamment sur la figure 2. L'agencement 3 est destiné à assurer le positionnement et le maintien du rail de guidage 20 de la porte 2. De préférence, l'agencement 3 concerne le rail de guidage inférieur.

Dans ce cas, l'agencement 3 comprend le rail de guidage 20 inférieur. Le rail de guidage 20 comprend une extrémité arrière 22 et une extrémité avant 21. L'agencement 3 comprend encore le côté de caisse 10. Le côté de caisse 10 comprend un boîtier 30 de positionnement et de maintien de l'extrémité avant 21 du rail de guidage 20. Le boîtier 30 est illustré sur les figures 2, 3, 4, 5, 6, et 7. Le boîtier 30 s'étend transversalement, ou sensiblement transversalement, vers l'intérieur du véhicule. Ainsi, le boîtier 30 s'étend vers l'habitacle 5.

Le côté de caisse 10 et le rail de guidage 20 comprennent des moyens de positionnement 50 l'un par rapport à l'autre. Le côté de caisse 10 et le rail de guidage 20 comprennent encore des moyens de maintien 60 l'un par rapport à l'autre. Avantageusement, les moyens de positionnement 50 sont distincts des moyens de maintien 60. Par distincts, on entend que les moyens de positionnement servent exclusivement, ou sensiblement exclusivement, au positionnement du rail 20 par rapport au côté de caisse et que les moyens de maintien servent exclusivement, ou sensiblement exclusivement, au maintien du rail 20 sur le côté de caisse.

Comme illustré sur la figure 2, les moyens de positionnement 50 comprennent un pion de centrage arrière 51, ou axe, ou axe de centrage ou d'indexage, ou pilote, ou pilote de positionnement. Le pion de centrage arrière 51 est fixé sur le côté de caisse 10. Par exemple, le pion de centrage 51 est fixé par soudage sur le côté de caisse. Le pion de centrage arrière 51 s'étend transversalement, ou sensiblement transversalement, vers l'extérieur du véhicule. Les moyens de positionnement 50 comprennent encore un orifice arrière 53 ménagé sur le rail de guidage 20. L'orifice arrière 53 est destiné à s'insérer sur le pion de centrage arrière 51 lors du montage du rail de guidage sur le côté de caisse ce qui sera explicité plus loin.

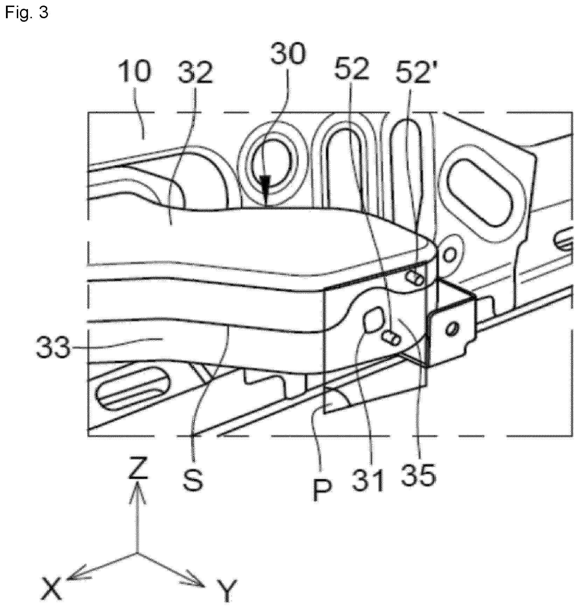

Comme illustré sur la figure 3, le boîtier 30 comprend une face distale 35 s'étendant dans un plan P vertical et longitudinal, ou sensiblement vertical et longitudinal. La face distale 35 est orientée du côté intérieur du véhicule. Ainsi, la face distale 35 est en vis-à-vis d'un plan médian vertical et longitudinal du véhicule (non représenté).

L'agencement 3 comprend encore une plaque ou cale 40.

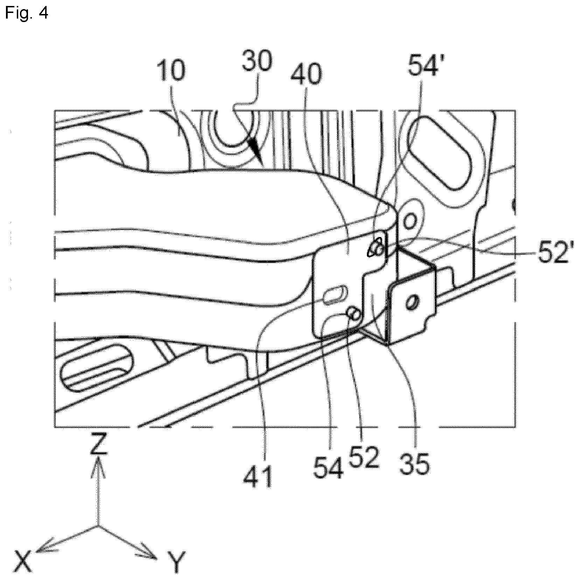

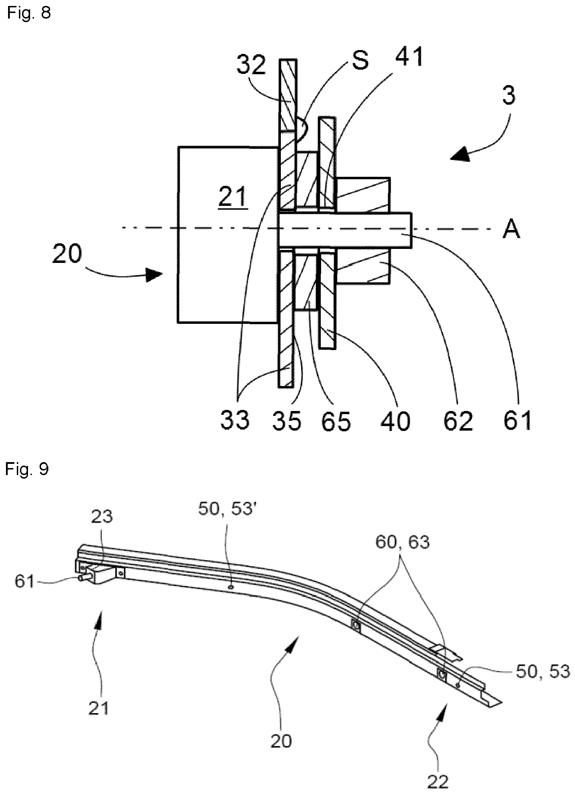

Comme illustré sur la figure 4, la plaque 40 est destinée à venir en vis-à-vis de la face distale 35. Par exemple, la plaque 40 vient directement au contact de la face distale 35 du boîtier 30. Avantageusement, comme illustré sur la figure 8, l'agencement 3 comprend encore une entretoise 65. L'entretoise 65 est par exemple une rondelle apte à laisser passer le goujon 61. L'entretoise 65 est placée entre la face distale 35 du boîtier 30 et la plaque 40. Autrement dit, l'entretoise 65 est prise en sandwich entre la face distale 35 et la plaque 40.

De préférence, comme illustré sur les figures 3 à 6, les moyens de positionnement 50 comprennent un pion de centrage avant 52 fixé sur la face distale 35 du boîtier 30. Par exemple, le pion de centrage avant 52 est fixé par soudage, notamment par un arc circulaire. Le pion de centrage avant 52 s'étend transversalement vers l'intérieur du véhicule. Les moyens de positionnement 50 comprennent encore un orifice avant 54 ménagé sur la plaque 40. Ainsi, l'orifice avant 54 est destiné à s'insérer sur le pion de centrage avant 52.

Avantageusement, comme illustré sur les figures 3 à 6, les moyens de positionnement 50 comprennent deux pions de centrage avant 52, 52' fixés sur ou à proximité de la face distale 35 du boîtier 30. Par exemple, les pions sont soudés sur le boîtier, notamment par un arc circulaire. Les deux pions de centrage avant 52, 52' s'étendent transversalement vers l'intérieur du véhicule. Les pions avant 52, 52' sont alors parallèles ou sensiblement parallèles. Dans ce cas, les moyens de positionnement 50 comprennent deux orifices avant 54, 54' ménagés sur la plaque 40. Les deux orifices avant 54, 54' sont destinés à s'insérer sur les deux pions de centrage avant 52, 52'.

Alternativement, ou en complément, comme illustré sur la figure 2, les moyens de positionnement 50 comprennent deux pions de centrage arrière 51, 51' fixés sur le côté de caisse 10. Par exemple, les pions arrière sont fixés par soudage, notamment par un arc électrique circulaire. Les deux pions de centrage arrière 51, 51' s'étendent transversalement, ou sensiblement transversalement, vers l'extérieur du véhicule. En cas de rail de guidage 20 courbé illustré sur les figures 2 et 9, par exemple, le pion de centrage arrière 51' ne s'étend pas transversalement. Les moyens de positionnement 50 comprennent alors deux orifices arrière 53, 53' ménagés sur le rail de guidage 20. Les deux orifices arrière 53, 53' sont destinés à s'insérer sur les deux pions de centrage arrière 51, 51'.

Par exemple, les pions de centrage avant et/ou arrière sont de section circulaire et les orifices correspondant sont de section circulaire également. Par exemple, le jeu entre le diamètre de la section d'un pion de centrage et le diamètre de l'orifice correspondant est faible. Par exemple le diamètre de l'orifice est de l'ordre de 0.1 mm à 0.2 mm supérieur au diamètre de la section du pion. Avantageusement, le diamètre d'un pion de centrage est compris entre 4 mm et 6 mm, de préférence de l'ordre de 5 mm.

Concernant la plaque 40, de préférence l'orifice avant 54 est circulaire alors que l'autre orifice avant 54' est oblong ou de type lumière. Par exemple, comme illustré sur les figures 4 à 6, l'orifice oblong 54' s'étend vers le haut et vers l'avant, par exemple en ayant un grand axe dirigé ou sensiblement dirigé vers l'axe du trou 54. Ainsi, la coopération du trou oblong 54' avec le pion 52' tolère un peu de jeu. Autrement dit, la coopération trou 54'/pion 52' empêche le pivotement de la plaque autour du pion 52. Grâce à ces pions avant, la cale 40 est positionnée précisément par rapport au boîtier 30, et par conséquent par rapport au côté de caisse.

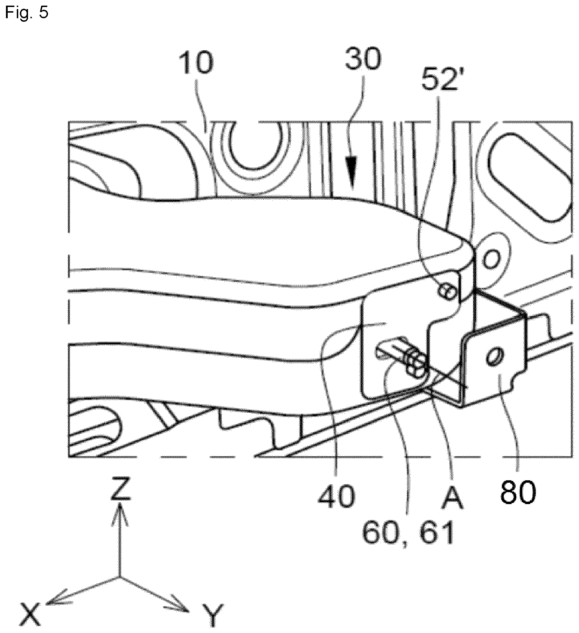

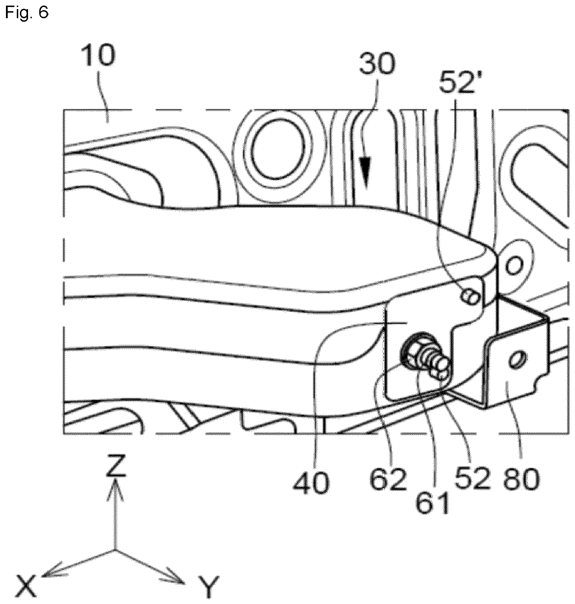

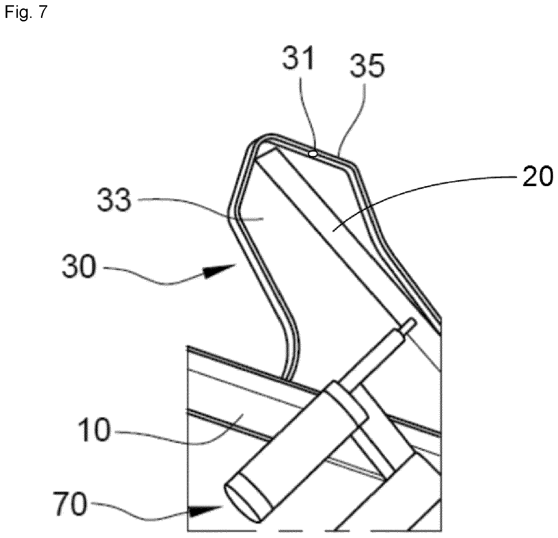

Comme illustré sur les figures 5, 6, 8 et 9, les moyens de maintien 60 comprennent une tige filetée ou goujon 61 d'axe A (figure 5) s'étendant depuis le rail de guidage 20. La tige fileté ou goujon 61 s'étend au niveau de l'extrémité avant 21 du rail de guidage. La tige filetée 61 s'étend transversalement, ou sensiblement transversalement, vers l'intérieur du véhicule. Avantageusement, comme illustré notamment sur la figure 9, le rail comprend une platine 23 de fixation de la tige filetée 61. A noter que le rail illustré sur la figure 9 est un rail destiné à équiper un côté de caisse droit, c'est-à-dire opposé au côté de caisse illustré sur les autres figures. Le boîtier 30 comprend alors un trou de passage 31 pour la tige filetée 61 illustré sur les figures 3 et 7. La plaque 40 comprend également un trou ou une boutonnière ou une lumière 41, de préférence un trou oblong, de passage de la tige filetée 61 (figures 4 et 5). Les moyens de maintien 60 comprennent encore un écrou 62 destiné à coopérer avec la tige filetée 61 (figures 6 et 8). La coopération de l'écrou 62 avec la tige filetée 61 permet de maintenir en position l'extrémité avant 21 du rail de guidage 20 par rapport au boîtier 30 ce qui sera détaillé plus loin.

De plus, les moyens de maintien 60 comprennent au moins un trou 63 ménagé dans le rail de guidage 20. Les moyens de maintien 60 comprennent alors au moins un moyen de fixation coopérant avec l'au moins un trou 63 de sorte à fixer le rail de guidage 20 sur le côté de caisse 10. De préférence, le moyen de fixation est de type vis/écrou (non illustré).

De préférence, comme illustré sur la figure 9, deux trous 63 sont ménagés dans la partie arrière du rail 20 de sorte à coopérer avec des trous ménagés dans le côté de caisse 10 et/ou avec des moyens de fixation. Par exemple, chaque moyen de fixation traverse chaque trou 63 et un trou ménagé dans le côté de caisse. Dans ce cas, le moyen de fixation est par exemple un boulon ou un rivet. Alternativement, une tige filetée est fixée sur le côté de caisse, par exemple par soudage ou brasage ou collage ou maintenu sur le côté de caisse par un autre moyen, de sorte que la tige filetée traverse le trou 63 et coopère avec un écrou pour assurer la fixation de l'arrière 22 du rail sur le côté de caisse.

De préférence, comme illustré sur les figures 3 à 7, le boîtier 30 est obtenu à partir de deux demi-coques 32, 33. De préférence, chaque demi-coque est une tôle emboutie. De préférence encore, chaque demi-coque s'étend sensiblement dans un plan transversal et longitudinal. Ainsi, le boîtier comprend une demi-coque supérieure 32 et une demi-coque inférieure 33. De préférence, les demi-coques sont fixées l'une à l'autre par soudage. Avantageusement, comme illustré sur la figure 3, la soudure entre les demi-coques est de type cordon de soudure S continu, notamment réalisé à l'arc électrique, de sorte à éviter les problématiques d'étanchéité et/ou de corrosion.

De préférence, la face distale 35 du boîtier 30 s'étend sur une seule demi-coque 32; 33 ou sensiblement sur une seule demi-coque. Pour cela, comme illustré sur la figure 3, en cas de face distale 35 ménagée sur la demi-coque inférieure 33, la demi-coque inférieure s'étend vers le haut au niveau de la face distale. Dans ce cas, le cordon S ne s'étend pas intégralement dans un plan transversal et longitudinal ou sensiblement dans un plan transversal et longitudinal, le cordon S formant une déviation vers le haut, par exemple en formant une courbe. Comme illustré sur la figure 3, le pion 52 est fixé sur la demi-coque inférieure 33 et le pion 52' est fixé sur la demi-coque supérieure 32.

Alternativement, la face distale est ménagée sur la demi-coque supérieure 32. La demi-coque supérieure 32 s'étend alors vers le bas au niveau de la face distale. Le cordon de soudure S forme alors une déviation vers le bas, par exemple en formant une courbe.

A noter que le boîtier 30 est fixé au côté de caisse 10, par exemple par soudage, par exemple par l'intermédiaire d'une feuillure.

Les emplacements des pions de centrages 51, 51' sur le côté de caisse et les emplacements des pions 52, 52' sur le boîtier sont déterminés très précisément puisqu'ils définissent le positionnement final du rail de guidage par rapport au côté de caisse. Le positionnement du rail a une grande importance vis-à-vis du positionnement de la porte qu'il va guider et/ou supporter. De préférence, un pointage laser est réalisé sur le côté de caisse ainsi que sur le boîtier qui fait partie du côté de caisse. Le laser peut ainsi prendre en compte les éventuelles dispersions de chaque côté de caisse et définir en fonction de celles-ci notamment les emplacements précis des pions. De préférence, chaque pion 51, 51' est ensuite fixé par soudage, par exemple par un robot 70 depuis l'extérieur du côté de caisse, comme illustré sur la figure 7, au niveau des points définis par le laser. De préférence, chaque pion 52, 52' est également fixé par soudage sur le boîtier par le robot, depuis l'intérieur du côté de caisse, la tête de robot ayant alors accès sans difficulté.

Un mode d'exécution d'un procédé de montage de l'agencement 3 va maintenant être décrit.

Dans un premier temps, on procède à une étape de fourniture du rail de guidage 20 et du côté de caisse 10. Pour rappel, le côté de caisse comprend le boîtier 30 de positionnement et de maintien de l'extrémité avant 21 du rail de guidage 20. Le boîtier 30 s'étend transversalement, ou sensiblement transversalement, vers l'intérieur du véhicule. Comme illustré sur la figure 3, le boîtier 30 comprend les pions de centrage avant 52, 52' et la face distale 35. Pour rappel, la face distale 35 s'étend dans un plan vertical et longitudinal ou sensiblement vertical et longitudinal.

Comme illustré sur la figure 3, en cas de cordon de soudure S entre les demi-coques 32, 33 du boîtier, le cordon S ne s'étend pas ou peu sur la face distale 35. On procède ensuite à une étape de positionnement de la plaque 40 contre la face distale 35. Ce positionnement s'effectue en faisant correspondre les deux orifices avant 54, 54' avec les pions avant 52, 52'.

De préférence, comme illustré sur la figure 8, l'entretoise plane 65 est placée entre la face distale 35 et la plaque 40 de sorte à créer un contact plan entre la face distale 35 et la plaque 40. Ainsi, la plaque 40 évite tout appui, même partiel, sur le cordon de soudure S de liaison des coques 32, 33 du boîtier 30. A titre d'exemple la rondelle 65 a une épaisseur comprise entre 2 mm et 5 mm de sorte à compenser l'épaisseur d'un bourrelet du cordon de soudure S dépassant de la face distale. Ainsi, cette entretoise 65 évite que la plaque 40 soit déviée d'un plan vertical et longitudinal du fait du contact de la plaque 40 contre le cordon de soudure S.

A noter que le placement de l'entretoise 65 peut être réalisé avant le positionnement de la plaque 40. Dans ce cas, éventuellement l'entretoise 65 comprend un trou permettant de venir l'insérer sur le pion de centrage 52 adjacent avec un jeu conséquent de sorte à ne pas interférer sur le positionnement de la plaque par rapport à la face distale 35.

Ensuite, on procède à une étape de positionnement du rail de guidage 20 par rapport au côté de caisse 10 par l'intermédiaire des moyens de positionnement 50. Plus précisément, comme illustré sur la figure 2 (rail en position insérée sur le côté de caisse), on insère le rail 20 transversalement ou sensiblement transversalement vers l'intérieur du véhicule de sorte à insérer les orifices arrière 53, 53' du rail sur les pions arrière 51, 51' fixés sur le côté de caisse. Simultanément, on insère le goujon 61 de l'avant du rail 20 dans le trou 31 ménagé dans la face distale 35 et dans le trou 41 de la plaque de sorte à obtenir le montage illustré sur la figure 5. En cas de présence de l'entretoise 65, soit elle est placée préalablement au placement de la plaque 40 sur les pions avant, soit elle est maintenue lors de l'insertion du goujon 61 de sorte à la prendre en sandwich entre la face distale 35 et la plaque 40. Grâce aux moyens de positionnement du rail par rapport au côté de caisse à l'arrière 53, 51, 53', 51', l'arrière du rail est correctement et précisément positionné. Grâce à l'insertion du goujon 61 dans le trou 41 de la plaque 40 qui est positionnée précisément par rapport au boîtier du fait des deux pions avant 52, 52' coopérant avec les orifices 54, 54' de la plaque, l'avant du rail est correctement positionné. De préférence, le jeu entre le goujon 61 et le trou 41 est faible selon la direction verticale de sorte à figer le positionnement du rail selon la direction verticale sans figer son positionnement selon la direction longitudinale. En effet, pour rappel, le trou 41 est oblong et s'étend de préférence longitudinalement. Par exemple, le goujon fileté 61 est de type M8.

On procède ensuite à une étape de fixation du rail de guidage 20 sur le côté de caisse 10. Cette fixation est assurée par l'intermédiaire de moyens de maintien 60, de préférence par serrage de moyens de maintien 60 de type vis/écrous. Ainsi, à l'avant on procède au vissage d'un écrou 62 sur le goujon 61, éventuellement précédé de l'insertion d'une rondelle d'appui (non illustrée). A l'arrière, on procède à la fixation via les trous 63 ménagés dans le rail, de préférence avec des boulons traversant le rail et le côté de caisse comme cela a été évoqué précédemment. On procède ensuite au serrage des moyens de maintien à l'avant et à l'arrière. Pour rappel, de préférence, ces moyens de maintien n'ont pas vocation à permettre un réglage du rail de guidage 20 par rapport au côté de caisse. En effet, ces moyens de maintien n'assurent que le maintien en position. Les moyens de positionnement que sont les pions de centrage coopérant avec des orifices condamnent le placement du rail de guidage par rapport au côté de caisse.

Grâce à la plaque 40 la solution permet de positionner précisément l'avant du rail de guidage 20 au sein du boîtier 30 alors que le robot de soudure ne peut pas accéder au sein du boîtier par manque d'espace pour souder un pion de centrage. En effet, pour rappel, le boîtier est un corps creux au sein duquel vient se loger l'extrémité avant du rail. L'extrémité avant du rail nécessite de s'étendre vers l'intérieur de l'habitacle du fait de la cinématique de la porte 2 qui termine sa course en fermeture selon une direction transversale ou sensiblement transversale. Ainsi, par le biais de la plaque 40, bien que le rail soit monté par l'extérieur du véhicule, le rail est positionné précisément par les pilotes 52, 52' soudés par l'intérieur du véhicule sur le boîtier.

En résumé, trois pilotes assurent le positionnement du rail. Deux pilotes, les deux pions arrière 51, 51', assurent l'indexage ou positionnement selon la direction longitudinale et selon la direction verticale. Le troisième pilote, le goujon 61, coopérant sans jeu ou sensiblement sans jeu selon la direction verticale dans le trou 41 ménagé dans la plaque 40, assure l'indexage ou positionnement selon la direction verticale. L'indexage ou positionnement du rail 20 selon la direction transversale est de préférence assurée par le contact du rail contre le côté de caisse au niveau des pions 51, 51' et par le contact au fond du boîtier 30. Avantageusement, à cet effet de positionnement selon la direction transversale, la platine 23 (illustrée sur la figure 9) permet d'assurer une surface de contact conséquente du rail 20 contre le fond du boîtier 30.

Grâce à la solution, le rail de guidage 20 inférieur supportant et guidant la porte 2 est parfaitement positionné. Ce positionnement optimal du rail favorise des jeux et affleurements faibles et réguliers ainsi que la fluidité de la porte coulissante aussi bien en ouverture qu'en fermeture. La solution permet ainsi de limiter, voire de supprimer, les réglages longs, fastidieux et pénibles pour les opérateurs en fin de chaîne de montage des véhicules pour obtenir les jeux, affleurements et fluidité recherchés de la porte. Il en résulte des économies conséquentes. De plus, on s'affranchit des dispersions d'assemblage du fait du pré-positionnement précis du rail de guidage sur le côté de caisse avant le serrage des moyens de maintien en position.

Ainsi, on s'affranchit de la pose de gabarit chronophage et fastidieuse pour assurer le positionnement de la porte. On évite par conséquent les dégradations potentielles du véhicule lors de la mise en place et de la dépose des gabarits.

En résumé, la solution limite le temps opératoire de montage. En effet, la réduction des dispersions diminue significativement les temps de retouches en fin de chaîne de montage. En outre, la solution permet d'améliorer la qualité perçue en termes de jeux et d'affleurements sur le véhicule fini. La régularité des jeux élimine tout point dur et/ou grincement au cours des déplacements en ouverture et/ou en fermeture de la porte. De plus, la solution facilite le montage du rail, et par conséquent de la porte latérale coulissante. Les opérations s'en trouvent plus rapides, plus simples et davantage reproductibles.

Comme évoqué précédemment, le rail de guidage est de préférence le rail de guidage inférieur. Ce rail inférieur reprend généralement environ la moitié de la masse de la porte c'est pourquoi il est important qu'il soit parfaitement positionné et correctement maintenu en position. Avantageusement, comme illustré sur les figures 5 et 6, un renfort 80 est fixé au côté de caisse et/ou à une traverse et/ou à un longeron du véhicule. Le renfort 80 permet de préférence de reprendre des efforts, notamment dirigés vers le bas, du boîtier 30 (fixations au boîtier non illustrées).

Cette solution de réglage ou positionnement de porte qui a été décrite est particulièrement adaptée à une porte latérale coulissante arrière s'ouvrant vers l'arrière. Elle peut être appliquée à une porte latérale coulissante arrière s'ouvrant vers l'avant. Dans ce cas, le boîtier est agencé à l'arrière. En outre, elle peut être appliquée à une porte latérale coulissante avant s'ouvrant vers l'avant ou vers l'arrière.

En remarque, la solution atteint donc l'objectif recherché de limiter les réglages après montage d'une porte coulissante sur un véhicule, tout en facilitant son montage, et présente les avantages suivants :
- elle est économique,
- elle peut être utilisée pour le positionnement de rail de guidage de porte sur d'autres types de véhicules, tels que des engins agricoles, des engins de chantier, des trains, voire des bateaux ou des aéronefs.

Bien que la solution soit particulièrement adaptée et ait été décrite pour une porte coulissante latérale de véhicule automobile, un coffre et une porte de coffre s'étendant transversalement, par exemple d'un véhicule utilitaire, pourraient être adaptés de sorte à permettre le positionnement et le maintien d'un rail de guidage. De préférence, une telle porte ne s'étend alors que sur la moitié de la largeur du coffre.

## Revendications

1. Agencement (3) destiné à assurer le positionnement et le maintien d'un rail de guidage (20) d'une porte latérale coulissante (2) de véhicule, notamment de véhicule automobile (1), notamment le positionnement et le maintien d'un rail de guidage inférieur, comprenant :
- un rail de guidage (20) comprenant une extrémité arrière (22) et une extrémité avant (21),
- un côté de caisse (10) comprenant un boîtier (30) de positionnement et de maintien de l'extrémité avant (21) du rail de guidage (20), le boîtier (30) s'étendant transversalement vers l'intérieur d'un tel véhicule,
**caractérisé en ce que** le côté de caisse (10) et le rail de guidage (20) comprennent des moyens de positionnement (50) l'un par rapport à l'autre et **en ce que** le côté de caisse (10) et le rail de guidage (20) comprennent des moyens de maintien (60) l'un par rapport à l'autre, les moyens de positionnement (50) étant distincts des moyens de maintien (60).

2. Agencement (3) selon la revendication précédente, **caractérisé en ce que** les moyens de positionnement (50) comprennent un pion de centrage arrière (51) fixés sur le côté de caisse (10), notamment par soudage, le pion de centrage arrière (51) s'étendant transversalement vers l'extérieur d'un tel véhicule,
les moyens de positionnement (50) comprenant un orifice arrière (53) ménagé sur le rail de guidage (20),
l'orifice arrière (53) étant destiné à s'insérer sur le pion de centrage arrière (51).

3. Agencement (3) selon l'une des revendications précédentes, **caractérisé en ce que** le boîtier (30) comprend une face distale (35) s'étendant dans un plan (P) vertical et longitudinal, ou sensiblement vertical et longitudinal, la face distale (35) étant orientée du côté intérieur d'un tel véhicule,
et **en ce que** l'agencement (3) comprend une plaque (40), la plaque (40) étant destinée à venir en vis-à-vis de la face distale (35), notamment au contact de la face distale (35) du boîtier (30).

4. Agencement (3) selon la revendication précédente, **caractérisé en ce que** les moyens de positionnement (50) comprennent un pion de centrage avant (52) fixé sur la face distale (35) du boîtier (30), notamment par soudage, le pion de centrage avant (52) s'étendant transversalement vers l'intérieur d'un tel véhicule,
les moyens de positionnement (50) comprenant un orifice avant (54) ménagé sur la plaque (40),
l'orifice avant (54) étant destiné à s'insérer sur le pion de centrage avant (52).

5. Agencement (3) selon l'une des revendications 3 ou 4, **caractérisé en ce que** les moyens de positionnement (50) comprennent deux pions de centrage avant (52, 52') fixés sur la face distale (35) du boîtier (30), notamment par soudage, les deux pions de centrage avant (52, 52') s'étendant transversalement vers l'intérieur d'un tel véhicule,
les moyens de positionnement (50) comprenant deux orifices avant (54, 54') ménagés sur la plaque (40), les deux orifices avant (54, 54') étant destinés à s'insérer sur les deux pions de centrage avant (52, 52'), et/ou
les moyens de positionnement (50) comprennent deux pions de centrage arrière (51, 51') fixés sur le côté de caisse (10), notamment par soudage, les deux pions de centrage arrière (51, 51') s'étendant transversalement vers l'extérieur d'un tel véhicule,
les moyens de positionnement (50) comprenant deux orifices arrière (53, 53') ménagés sur le rail de guidage (20), les deux orifices arrière (53, 53') étant destinés à s'insérer sur les deux pions de centrage arrière (51, 51').

6. Agencement (3) selon l'une des revendications 3 à 5, **caractérisé en ce que** les moyens de maintien (60) comprennent une tige filetée (61) s'étendant depuis le rail de guidage (20) au niveau de son extrémité avant (21), la tige filetée (61) s'étendant transversalement vers l'intérieur d'un tel véhicule, le boîtier (30) comprenant un trou de passage (31) de la tige filetée (61), la plaque (40) comprenant un trou oblong (41) de passage de la tige filetée (61), les moyens de maintien (60) comprenant un écrou (62) destiné à coopérer avec la tige filetée (61) de sorte à maintenir en position le rail de guidage (20) par rapport au boîtier (30).

7. Agencement (3) selon la revendication précédente, **caractérisé en ce que** les moyens de maintien (60) comprennent au moins un trou (63) ménagé dans le rail de guidage (20) et/ou ménagé dans le côté de caisse (10) et au moins un moyen de fixation (64) du rail de guidage (20) sur le côté de caisse (10), l'au moins un moyen de fixation (64) coopérant avec l'au moins un trou (63) de sorte à fixer le rail de guidage (20) sur le côté de caisse (10), notamment un moyen de fixation (64) de type vis/écrou.

8. Agencement (3) selon l'une des revendications précédentes, **caractérisé en ce que** le boîtier (30) est obtenu à partir de deux demi-coques, notamment deux demi-coques en tôle emboutie, notamment une demi-coque supérieure (32) et une demi-coque inférieure (33), les demi-coques étant fixées l'une à l'autre, notamment par soudage.

9. Agencement (3) selon la revendication précédente en combinaison avec la revendication 3, **caractérisé en ce que** la face distale (35) s'étend sur une seule demi-coque (32 ; 33) ou sensiblement sur une seule demi-coque.

10. Agencement (3) selon l'une des revendications précédentes en combinaison avec la revendication 3, **caractérisé en ce que** l'agencement (3) comprend une entretoise (65), notamment une rondelle, agencée entre la face distale (35) du boîtier (30) et la plaque (40).

11. Véhicule, notamment véhicule automobile (1), **caractérisé en ce qu'**il comprend au moins un agencement (3) selon l'une des revendications précédentes.

12. Procédé de montage d'un agencement (3) selon l'une des revendications 1 à 10, **caractérisé en ce qu'**il comprend :
- une étape de fourniture d'un rail de guidage (20), d'un côté de caisse (10) comprenant un boîtier (30) de positionnement et de maintien d'une extrémité avant (21) du rail de guidage (20), le boîtier (30) s'étendant transversalement vers l'intérieur d'un tel véhicule,
- une étape de positionnement du rail de guidage (20) par rapport au côté de caisse (10) par l'intermédiaire de moyens de positionnement (50), éventuellement précédée ou suivie d'une étape de positionnement d'une plaque (40) en vis-à-vis d'une face distale (35) du boîtier (30), notamment après une étape de montage d'une entretoise (65) au contact de la face distale (35), puis
- une étape de fixation du rail de guidage (20) sur le côté de caisse (10) par l'intermédiaire de moyens de maintien (60), notamment par serrage de moyens de maintien (60) de type vis/écrous.
